# EUROPÄISCHE PATENTSCHRIFT

(11) **EP 1 229 264 B1**
(45) Veröffentlichungstag und Bekanntmachung des Hinweises auf die Patenterteilung: **14.09.2005**
(21) Anmeldenummer: 02001312.4
(22) Anmeldetag: 18.01.2002
(51) Int. Cl.: F16D 27/00, F16H 61/00, F16K 31/00, F15B 13/043, F15B 13/044, F16D 21/04

(54) **Ansteuereinrichtung für hydraulische und/oder mechanische Komponenten**
Control device for hydraulic and/or mechanical components
Dispositif de commande pour composants hydrauliques et/ou mécaniques

(30) Priorität: 26.01.2001 DE 10103426
(43) Veröffentlichungstag der Anmeldung: 07.08.2002
(73) Patentinhaber: HYDRAULIK-RING GMBH, 97828 Marktheidenfeld (DE)
(72) Erfinder: Trzmiel, Alfred, 72661 Grafenberg (DE); Meyer, Roland, 91154 Roth (DE); Wild, Andreas, 72669 Unterensingen (DE)
(74) Vertreter: Jackisch-Kohl, Anna-Katharina

(56) Entgegenhaltungen:
- EP-A- 0 355 723
- EP-A- 0 504 465
- EP-A- 0 922 872
- WO-A-99/36719
- DE-A- 4 445 606
- DE-A- 19 532 960
- DE-A- 19 538 596
- DE-A- 19 738 069
- US-A- 4 930 608
- US-A- 5 821 671
- US-A- 5 911 245
- MATTEN N ET AL: "STETIGWIRKENDES WEGEVENTIL MIT PIEZOAKTUATORISCHEM STELLELEMENT" OLHYDRAULIK UND PNEUMATIK, VEREINIGTE FACHVERLAGE, MAINZ, DE, Bd. 38, 1. Juni 1994 (1994-06-01), Seiten 350,352,354-355, XP000195279 ISSN: 0341-2660
- PATENT ABSTRACTS OF JAPAN vol. 010, no. 381 (M-547), 19. Dezember 1986 (1986-12-19) & JP 61 171907 A (AKASHI SEISAKUSHO CO LTD), 2. August 1986 (1986-08-02)

## Beschreibung

Die Erfindung betrifft ein Wegeventil mit einer Ansteuereinrichtung nach dem Oberbegriff des Anspruches 1.

Es ist bekannt, hydraulische Ventile mit Hubmagneten als Ansteuereinrichtung zu betätigen. Kupplungen werden mittels Druckfeder und hydraulischem oder pneumatischen Zylinder geöffnet. Kupplungen können auch mit Druck geschlossen werden, so daß die unbetätigte Kupplung geöffnet ist und durch einen hydraulischen oder pneumatischen Zylinder geschlossen wird. Weitere Komponenten sind beispielsweise Getriebeschaltungen, deren Ansteuereinrichtungen Schaltgabeln, Schaltbleche, Synchronringe und dergleichen aufweisen. Bei automatisierten Handschaltgetrieben werden hydraulische Aktuatoren eingesetzt, um die Gassen des Getriebes auszuwählen und die jeweiligen Gänge einzulegen.

Diese Ansteuereinrichtungen sind verhältnismäßig kompliziert ausgebildet. So setzen sich Magnete aus vielen Einzelteilen zusammen und haben relativ große Abmessungen. Durch die große Masse der Hubeinrichtung im Magneten in Form von Stößeln oder Ankern ist eine Zeitverzögerung vom Anlegen des Schaltstroms bis zur Reaktion des hydraulischen Ventils unvermeidbar. Bei Kupplungen mit Druckfeder tritt eine große Hysterese und eine Temperaturabhängigkeit der Federkennlinie auf. Darüber hinaus sind große Stellwege und ein hoher Verschleiß nachteilig. Dadurch kann der Öffnungsmechanismus, zum Beispiel eine Selbstnachstellung zum Verschleißausgleich der Kupplungsbeläge, nur schwierig geregelt werden. Wegen der Hysterese und der Temperaturabhängigkeit ist der Ausgleich von Schwankungen in der Betätigungskraft ebenfalls nur schwierig zu regeln.

Bei Getriebeschaltungen müssen die Synchronringe mit speziell ausgeführten Reibbelägen und Geometrien zur Anpassung der Drehzahl und zu einer geräusch- und verschleißarmen Schaltung des Getriebes ausgeführt sein. Eine Hubbewegung bzw. eine Axialbewegung der Synchroneinrichtung über eine längere Wegstrecke (Größenordnung etwa 10 mm) ist notwendig, um den Schaltungsablauf durchzuführen. Die hierzu eingesetzte Betätigungseinrichtung ist jedoch mit vielen Einzeltoleranzen behaftet und entsprechend ungenau. Außerdem ändert sich durch Verschleiß der Bauteile der Schaltablaufpunkt. Die Synchroneinrichtungen mit ihren komplizierten Verzahnungen sind anfällig für Fehlschaltungen, die zur Beschädigung führen und einen vorzeitigen Ausfall des Getriebes nach sich ziehen können. Die Schaltzeit, das heißt die Zeitspanne für den Ablauf des Vorganges, die aus verschiedenen Gründen, zum Beispiel wegen der Zeit der Zugkraftunterbrechung, der Reaktionszeit einer Einrichtung und dergleichen so kurz wie möglich sein soll, kann durch die großen Wege bzw. Hübe mit ihren Toleranzen und den daraus resultierenden Zeiten für das Zurücklegen dieser Werte nicht unter eine gewisse Zeitspanne gedrückt werden.

Beim gattungsgemäßen Wegeventil (DE 195 38 596 A) wird ein Kolben an beiden Enden durch jeweils eine Druckfeder mittenzentriert. Die beiden Druckfedern stützen sich mit jeweils einem Ende an einem kegelförmigen Verschlußelement ab, das durch die Federkraft in eine Schließstellung gedrückt wird, in der es eine in einem Ventilsitz befindliche Durchtrittsöffnung verschließt. Zwischen dem Verschlußelement und dem benachbarten Ende des Kolbens befindet sich ein Druckraum, der geschlossen ist. Soll der Kolben verschoben werden, muß je nach Verschieberichtung eines der beiden Verschlußelemente von seinem Ventilsitz abgehoben werden. Hierzu werden Piezoelemente eingesetzt, die bei Bestromung sich längen und dadurch das jeweilige Verschlußelement abheben. Dann ist der Druckraum mit einem Tankanschluß verbunden, so daß der Kolben so verschoben werden kann, daß der Druckanschluß mit dem jeweiligen Verbraucheranschluß verbunden wird.

Der Erfindung liegt die Aufgabe zugrunde, das gattungsgemäße Wegeventil so auszubilden, daß sehr kurze Schaltzeiten bei einfachem konstruktiven Aufbau erreicht werden können.

Diese Aufgabe wird beim gattungsgemäßen Wegeventil erfindungsgemäß mit den kennzeichnenden Merkmalen des Anspruches 1 gelöst.

Beim erfindungsgemäßen Wegeventil werden die üblichen Betätigungseinrichtungen, wie Magnete, komplette Ventile sowie die Kupplungs- und Schaltmechaniken durch das direkt auf die Ansteuereinrichtung wirkende Piezoelement ersetzt, das ein spannungsabhängiges Weg-Kraft-Verhalten zeigt. Mit dem Piezoelement können äußerst kurze Reaktionszeiten erreicht werden, so daß ein sehr schnelles Ansprechen der anzusteuernden Einrichtungen möglich ist. Die Piezoelemente zeichnen sich durch einen kompakten Aufbau aus, so daß ein platz- und kostensparender Einsatz in den unterschiedlichsten Anwendungen möglich ist. Im Vergleich zu Elektromagneten benötigen die Piezoelemente nur sehr geringe Energie, da das Piezoelement nur bis zum Erreichen seiner Kapazität Energie aufnimmt, während ein Magnet dauernd Strom zieht. Das Piezoelement kann direkt auf ein Ventil, eine Kupplung, eine Schaltwelle oder ein Zahnrad wirken, so daß sich ein sehr einfacher Aufbau bei kleinen und kompakten Abmessungen ergibt. Die erzielbare Kraft des Piezoelementes liegt im Kilonewtonbereich. Sehr große Kräfte können durch entsprechende Parallelanordnung mehrerer Piezoelemente erreicht werden. Mit dem Piezoelement wird das Verschlußelement in seiner Schließstellung gehalten, in der es den Tankanschluß vom Druckraum trennt. Der Kolben kann in seine gewünschten Stellungen verschoben werden. Solange der Druck im Druckraum kleiner ist als die vom Piezoelement auf das Verschlußelement wirkende Gegenkraft, bleibt das Verschlußelement in seiner Schließstellung. Um die Durchtrittsöffnung des Ventilsitzes freizugeben, wird das Piezoelement bestromt, so daß das Druckmedium vom Druckraum über den geöffneten Ventilsitz zum Tank strömen kann. Dadurch kann der Druck des Mediums im Druckraum zwischen dem Ventilsitz und dem Kolben abgebaut werden. Wird das Piezoelement nicht mehr bestromt, wird das Verschlußelement wieder in seine Schließstellung zurückgeführt. Um den Piezohub an die unterschiedlichen Erfordernisse, zum Beispiel an einen bestimmten Ventilhub, anpassen zu können, können die Piezoelemente auch hintereinander angeordnet werden, so daß sich die Hübe der einzelnen Piezoelemente addieren. Infolge der erfindungsgemäßen Ausbildung ergibt sich eine wesentliche Vereinfachung der Betätigungsmechanik. Durch eine direkte Betätigung der jeweiligen Einrichtungen ergeben sich sehr geringe Toleranzen. Hydraulische Aktuatoren können durch die Piezoelemente ohne konventionelle Ventile direkt gesteuert werden. Mit der Stellfunktion der Piezoelemente kann auch eine Meßfunktion gekoppelt werden. Mit der durch den hydraulischen Druck erzeugten Kraft auf das Piezoelement kann der anliegende Druck sehr einfach ermittelt werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1 und Fig. 2: jeweils im Axialschnitt ein direkt gesteuertes Ventil mit einer Ansteuereinrichtung, das nicht Teil der Erfindung ist.
- Fig. 3 und Fig. 4: jeweils im Schnitt vorgesteuerte Ventile mit einer erfindungsgemäßen Ansteuereinrichtung,
- Fig. 5: im Axialschnitt eine weitere Ausführungsform eines direkt gesteuerten Ventils mit einer Ansteuereinrichtung, das nicht Teil der Erfindung ist.
- Fig. 6: eine weitere Ausführungsform eines vorgesteuerten Ventils mit einer erfindungsgemäßen Ansteuereinrichtung,
- Fig. 7: im Axialschnitt eine weitere Ausführungsform eines direkt gesteuerten Ventils mit einer Ansteuereinrichtung, das nicht Teil der Erfindung ist.
- Fig. 8: im Axialschnitt eine weitere Ausführungsform eines vorgesteuerten Ventils mit einer Ansteuereinrichtung, das nicht Teil der Erfindung ist.
- Fig. 9: im Axialschnitt einen Aktuator zur Getriebesteuerung mit einer Ansteuereinrichtung, die nicht Teil der Erfindung ist.
- Fig. 10: den Aktuator gemäß Fig. 9 bei ausgelenktem Hebel,
- Fig. 11: in vergrößerter Darstellung und im Schnitt eine andere Ausführungsform der Ansteuereinrichtung gemäß den Fig. 9 und 10 in unbestromtem Zustand,
- Fig. 12: die Ansteuereinrichtung gemäß Fig. 11 in bestromtem Zustand,
- Fig.13 und Fig. 14: in Darstellungen entsprechend den Fig. 11 und 12 eine weitere Ausführungsform einer Ansteuereinrichtung, die nicht Teil der Erfindung ist.
- Fig.15: im Axialschnitt eine Getriebeschaltung mit einer Ansteuereinrichtung, die nicht Teil der Erfindung ist.
- Fig. 16: im Axialschnitt eine Kupplung mit einer Ansteuereinrichtung,
- Fig. 17: in einer Darstellung entsprechend Fig. 16 eine weitere Ausführungsform einer Kupplung mit einer Ansteuereinrichtung, die nicht Teil der Erfindung ist.
- Fig. 18: teilweise im Axialschnitt und teilweise in Ansicht eine weitere Ausführungsform einer erfindungsgemäßen Ansteuereinrichtung,
- Fig. 19: im Axialschnitt eine weitere Ausführungsform einer erfindungsgemäßen Ansteuereinrichtung,
- Fig. 20: in Seitenansicht eine weitere Ausführungsform einer erfindungsgemäßen Ansteuereinrichtung,
- Fig. 21: einen Schnitt längs der Linie A-A in Fig. 20.

Mit den im folgenden beschriebenen Ansteuereinrichtungen können herkömmliche Betätigungseinrichtungen, wie Magnete, komplette Ventile und dergleichen, ersetzt werden. Diese Ansteuereinrichtungen haben wenigstens ein Piezoelement, das ein spannungsabhängiges Wege-Kraft-Verhalten zeigt. Mit diesem Piezoelement sind sehr kurze Reaktionszeiten möglich, so daß die angesteuerten Einrichtungen sehr rasch ansprechen. Die Piezoelemente benötigen nur geringen Platzbedarf, so daß die Ansteuereinrichtungen einen kompakten Aufbau haben und ein platz- und kostensparender Einsatz bei den unterschiedlichsten Anwendungen möglich ist. Die Piezoelemente haben zudem einen sehr geringen Energieverbrauch.

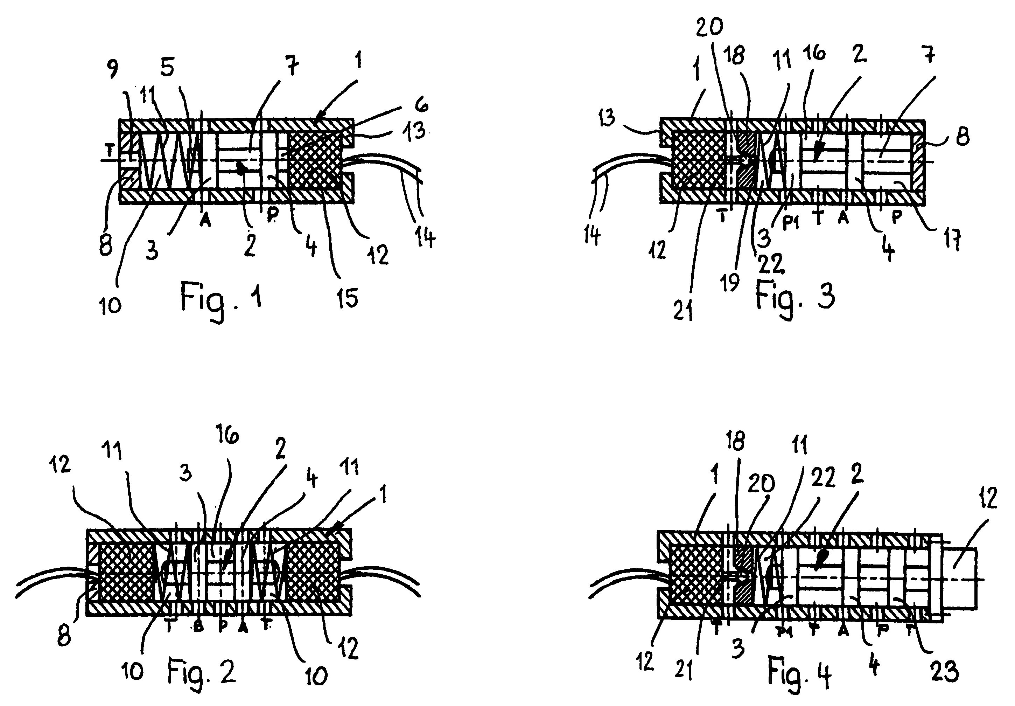

Fig. 1 zeigt ein direkt gesteuertes 3/2-Wegeventil mit einem Gehäuse 1, in dem ein Kolben 2 verschiebbar ist. Er hat zwei mit axialem Abstand voneinander liegende Kolbenstege 3, 4, die an der Innenwand des Gehäuses 1 anliegen. Über die Kolbenstege 3, 4 stehen axial die Enden 5, 6 einer Kolbenstange 7 vor. Das in Fig. 1 linke Ende des Gehäuses 1 ist durch einen Deckel 8 geschlossen, der mindestens eine.Öffnung 9 als Tankanschluß T aufweist. Der Deckel 8 begrenzt zusammen mit dem gegenüberliegenden Kolbensteg 3 einen Druckraum 10, in dem wenigstens eine Druckfeder 11 untergebracht ist, die im Ausführungsbeispiel eine Schraubendruckfeder ist. Sie stützt sich mit einem Ende am Deckel 8 und mit ihrem anderen Ende am Kolbensteg 3 ab. Durch die Druckfeder 11 wird das Kolbenstangenende 6 in Anlage an einem Piezoelement 12 gehalten, das durch einen radial nach innen gerichteten Flansch 13 des Gehäuses 1 axial gesichert ist. Anschlußleitungen 14 für das Piezoelement 12 sind durch den Flansch 13 nach außen geführt. Das Piezoelement 12 liegt mit seinem Mantel 15 an der Innenwand des Gehäuses 1 an.

In der in Fig. 1 dargestellten Ausgangslage ist der Druckanschluß P des Wegeventils durch den Kolbensteg 3 vom Arbeitsanschluß A getrennt, der mit dem Tankanschluß T verbunden ist. Um den an den Arbeitsanschluß A angeschlossenen Verbraucher zu betätigen, wird das Piezoelement 12 erregt, wodurch der Kolben 2 gegen die Kraft der Druckfeder 11 so weit verschoben wird, bis der Druckanschluß P mit dem Arbeitsanschluß A leitungsverbunden ist. Das über den Druckanschluß P zugeführte, unter Druck stehende Medium kann dann zum Arbeitsanschluß A und von dort zum Verbraucher strömen. Der Arbeitsanschluß A ist in dieser Stellung des Kolbens 2 durch den Kolbensteg 3 vom Tankanschluß T getrennt. Sobald das Piezoelement 12 nicht mehr bestromt wird, drückt die Druckfeder 11 den Kolben 2 in die in Fig. 1 dargestellte Ausgangslage zurück, wodurch der Arbeitsanschluß A wieder vom Druckanschluß P getrennt wird. Da nunmehr der Tankanschluß T und der Arbeitsanschluß A mit dem Druckraum 10 verbunden sind, kann das Druckmedium zum Tank T zurückströmen.

Bei diesem Wegeventil ersetzt das Piezoelement 12 als Ansteuereinrichtung einen Magneten, mit dem üblicherweise der Kolben 2 gegen die Kraft der Druckfeder 11 verschoben wird.

Fig. 2 zeigt ein direkt gesteuertes 4/3-Wegeventil, dessen Kolben 2 in einer Mittelstellung durch zwei Druckfedern 11 zentriert ist. Im Unterschied zur vorigen Ausführungsform ist ein zweites Piezoelement 12 vorgesehen, das am Deckel 8 des Gehäuses sowie an der Innenwandung des Gehäuses 1 anliegt. Die beiden Druckfedern 11 stützen sich jeweils am Piezoelement 12 sowie am Kolbensteg 3 bzw. 4 des Kolbens 2 ab. In der federzentrierten Mittelstellung gemäß Fig. 2 sind die Arbeitsanschlüsse A, B des Ventils durch die Kolbenstege 3, 4 geschlossen. In die beiden Aufnahmeräume 10 münden die Tankanschlüsse T, während der Druckanschluß P in den Druckraum 16 zwischen den beiden Kolbenstegen 3, 4 mündet.

Um den Arbeitsanschluß A oder B mit dem Druckanschluß P zu verbinden, wird das entsprechende Piezoelement 12 erregt, wodurch es sich längt und den Kolben 2 gegen die Kraft der jeweils gegenüberliegenden Druckfeder 11 verschiebt. Wird der Kolben 2 aus der Mittelstellung gemäß Fig. 2 nach links verschoben, wird der Druckanschluß P mit dem Arbeitsanschluß B verbunden, während der Arbeitsanschluß A mit dem Tankanschluß T verbunden wird. Somit kann der am Arbeitsanschluß B angeschlossene Verbraucher mit dem notwendigen, unter Druck stehenden Medium versorgt werden. Sobald das in Fig. 2 rechte Piezoelement 12 nicht mehr mit Strom versorgt wird, verkürzt es sich, so daß der Kolben 2 durch die Kraft der linken Druckfeder 11 in die Mittelstellung zurückgeschoben wird. Soll der Arbeitsanschluß A mit dem Druckanschluß P verbunden werden, wird das linke Piezoelement 12 bestromt, wodurch der Kolben 2 infolge der Längenzunahme des Piezoelementes 12 gegen die Kraft der Druckfeder 11 nach rechts so weit verschoben wird, daß der Arbeitsanschluß A mit dem Druckanschluß P verbunden ist.

Fig. 3 zeigt ein vorgesteuertes 3/2-Wegeventil mit dem Gehäuse 1, in dem der Kolben 2 gegen die Kraft wenigstens einer Druckfeder 11 verschiebbar ist. Der Kolben 2 trägt die beiden Kolbenstege 3, 4, die an der Innenseite des Gehäuses 1 anliegen. Die Kolbenstange 7 stützt sich mit ihrem in Fig. 3 rechten Ende am Deckel 8 des Gehäuses ab. Der Kolbensteg 3 begrenzt mit dem Deckel 8 einen Druckraum 17, in den der Druckanschluß P mündet.

Am Kolbensteg 3 stützt sich das eine Ende der Druckfeder 11 ab, deren anderes Ende an einem Ventilsitz 18 abgestützt ist, der im Gehäuse 1 befestigt ist. Dem Ventilsitz 18 liegt mit Abstand das Piezoelement 12 gegenüber, das durch den Gehäuseflansch 13 axial gesichert ist und das an der Innenwandung des Gehäuses 1 anliegt. Die Anschlußleitungen 14 des Piezoelementes 12 sind durch den Flansch 13 nach außen geführt.

Der Ventilsitz 18 hat eine zentrale Durchgangsöffnung 19, die durch ein Verschlußelement 20, vorzugsweise eine Kugel, geschlossen ist. Die Durchgangsöffnung 19 erweitert sich etwa ab halber Dicke des Ventilsitzes 18 kegelförmig in Richtung auf das Piezoelement 12. Das Verschlußelement 20 wird durch einen Stößel 21 in der in Fig. 3 dargestellten Schließstellung gehalten, an dem das Verschlußelement 20 befestigt ist. Der Stößel 21 wird durch das Piezoelement 12 betätigt. Im Bereich zwischen dem Piezoelement 12 und dem Ventilsitz 18 befindet sich der Tankanschluß T.

Um den Kolben 2 aus der in Fig. 3 dargestellten Ausgangslage nach links zu verschieben, wird über den Druckanschluß P das unter Druck stehende Medium in den Druckraum 17 eingebracht. Sobald der auf den Kolbensteg 4 wirkende Druck des Mediums größer ist als die Kraft der Druckfeder 11, wird der Kolben 2 so weit verschoben, daß der Arbeitsanschluß A mit dem Druckanschluß P verbunden ist. Dann kann das unter Druck stehende Medium über den Arbeitsanschluß A zum angeschlossenen Verbraucher strömen. Beim Verschieben des Kolbens 2 wird das im Druckraum 16 zwischen den beiden Kolbenstegen 3, 4 befindliche Medium über den Tankanschluß T zum Tank zurückgeführt. Das zwischen dem Ventilsitz 18 und dem Kolbensteg 3 befindliche Medium wird durch den Kolbensteg 3 beim Verschieben des Kolbens 2 unter Druck gesetzt. Solange dieser Druck kleiner ist als die vom Piezoelement 12 über den Stößel 21 auf das. Verschlußelement 20 wirkende Gegenkraft, verschließt das Verschlußelement 20 die Durchgangsöffnung 19. Um die Durchgangsöffnung 19 freizugeben, wird das Piezoelement 12 bestromt. Es verkürzt sich, so daß das Verschlußelement 20 über den Stößel 21 vom Ventilsitz 18 abhebt und das Medium über die Durchgangsöffnung 19 zum Tankanschluß T zwischen dem Piezoelement 12 und dem Kugelsitz 18 strömen kann. Dadurch wird der Druck des Mediums im Druckraum 22 zwischen dem Kugelsitz 18 und dem Kolbensteg 3 abgebaut. Wird das Piezoelement 12 nicht mehr bestromt, dann wird der Stößel 21 mit dem Verschlußelement 20 in die Schließstellung zurückgeführt. Dieses Wegeventil kann im Niederdruckbereich eingesetzt werden.

Fig. 4 zeigt ein vorgesteuertes 3/2-Wegeventil, das auch für den Hochdruckbereich geeignet ist. Der Kolben 2 weist im Unterschied zur Ausführungsform nach Fig. 3 drei mit axialem Abstand voneinander liegende Kolbenstege 3, 4, 23 auf, die an der Innenwand des Ventilgehäuses 1 anliegen. Das Piezoelement 12 hält mit seinem Stößel 21 das Verschlußelement 20 in der in Fig. 4 dargestellten Schließstellung im Ventilsitz 18. Zwischen dem Piezoelement 12 und dem Ventilsitz 18 befindet sich der Tankanschluß T.

Die Druckfeder 11 im Druckraum 22 stützt sich mit ihren Enden am Ventilsitz 18 und am Kolbensteg 3 ab. Anstelle des druckbelasteten Deckels bei der Ausführungsform nach Fig. 3 hat das Wegeventil gemäß Fig. 4 einen Magneten oder ein weiteres Piezoelement 12. Mit dem Magneten oder dem Piezoelement 12 kann der Kolben 2 betätigt werden. Das Ventil nach Fig. 4 arbeitet grundsätzlich gleich wie das Ventil nach Fig. 3.

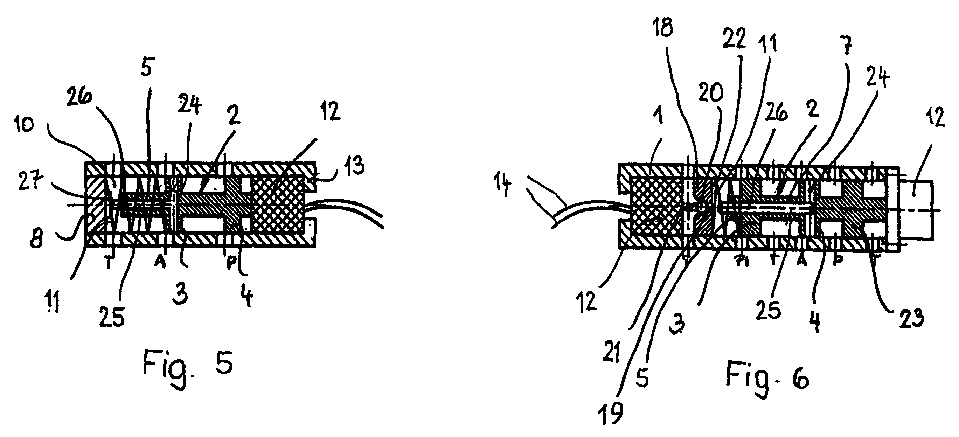

Fig. 5 zeigt ein direkt gesteuertes 3/2-Druckminderventil, das ähnlich ausgebildet ist wie das Wegeventil gemäß Fig. 1. Der Kolben 2 mit den beiden Kolbenstegen 3, 4 wird durch das Piezoelement 12 betätigt, das durch den Gehäuseflansch 13 gesichert ist. Der Kolbensteg 3 hat eine ihn diametral durchsetzende Bohrung 24, in die eine Bohrung 25 mündet, die im Kolbenende 5 zentral und axial verlaufend vorgesehen ist. Im Vergleich zur Ausführungsform nach Fig. 1 ist das Kolbenende 5 länger ausgebildet und wird von der Druckfeder 11 umgeben, die sich mit einem Ende am Gehäusedeckel 8 und mit ihrem anderen Ende am Kolbensteg 3 abstützt. In die Bohrung 25 ragt ein Stößel 26, der sich am Gehäusedeckel 8 bzw. auf einem zentralen Vorsprung 27 des Gehäusedeckels abstützt. Durch das in der Diametralbohrung 24 und in der Axialbohrung 25 befindliche, unter Druck stehende Medium wird der Stößel 26 in Anlage am Vorsprung 27 gehalten.

Wird das Piezoelement 12 bestromt, längt es sich, wodurch der Kolben 2 gegen die Kraft der Druckfeder 11 verschoben wird. Dadurch wird der Druckanschluß P mit dem Arbeitsanschluß A verbunden, an den der Verbraucher angeschlossen ist. Das im Aufnahmeraum 10 zwischen dem Gehäusedeckel 8 und dem Kolbensteg 3 befindliche Druckmedium gelangt beim Verschieben des Kolbens 2 über den Tankanschluß T zurück in den Tank. Das Kolbenende 5 bewegt sich auf dem Stößel 26, bis er bei maximal verstelltem Verschiebeweg an der Wandung der Diametralbohrung 24 anliegt.

Wird das Piezoelement 12 nicht mehr bestromt, wird der Kolben 2 durch die Druckfeder 11 wieder in die in Fig. 5 dargestellte Ausgangslage zurückgeschoben, in welcher der Kolbensteg 3 den Arbeitsanschluß A vom Druckanschluß P trennt.

Fig. 6 zeigt ein vorgesteuertes 3/2-Druckminderventil. Es hat den Kolben 2 mit den drei Kolbenstegen 3, 4, 23 ähnlich der Ausführungsform gemäß Fig. 4. An dem in Fig. 6 linken Ende des Gehäuses 1 befindet sich das Piezoelement 12 mit den nach außen geführten Anschlußleitungen 14. Das Piezoelement hat den zentralen, axialen Stößel 21 mit dem Verschlußelement 2a, das in Schließstellung die Durchgangsöffnung 19 im Ventilsitz 18 schließt. Zwischen dem Piezoelement 12 und dem Ventilsitz 18 befindet sich der Tankanschluß T.

Der Kolben 2 wird durch die Kraft der Druckfeder 11 in Anlage am Magneten oder einem weiteren Piezoelement 12 gehalten. Der mittlere Kolbensteg 4 hat die Diametralbohrung 24, in die ähnlich der vorigen Ausführungsform die axiale Bohrung 25 mündet, die in der Kolbenstange 7 vorgesehen ist und sich vom mittleren Kolbensteg 4 bis zum linken Kolbenende 5 erstreckt. In dieser Axialbohrung 25 ist der Stößel 26 untergebracht, der mit seinem rechten Ende an der Innenwand der Diametralbohrung 24 anliegt und dessen linkes Ende über das Kolbenende 5 vorsteht und geringen Abstand vom Ventilsitz 18 hat. In der in Fig. 6 dargestellten Ausgangslage, in welcher der Kolben 2 am rechten Magneten bzw. am rechten Piezoelement 12 anliegt, ist der Arbeitsanschluß A durch den Kolbensteg 3 vom Druckanschluß P1 und durch den Kolbensteg 4 vom Druckanschluß P getrennt. Das bestromte Piezoelement 12 drückt infolge seiner Verlängerung über den Stößel 21 das Verschlußelement 20 in die Schließstellung, so daß die Durchgangsöffnung 19 im Ventilsitz 18 geschlossen ist. Wird der Kolben 2 durch Betätigen des rechten Piezoelementes 12 oder eines Magneten gegen die Kraft der Druckfeder 11 verschoben, wird der Arbeitsanschluß A mit dem Druckanschluß P verbunden. Außerdem wird das im Druckraum 22 zwischen dem Ventilsitz 18 und dem Kolbensteg 3 befindliche Druckmedium unter Druck gesetzt. Um die Durchgangsöffnung 19 zu öffnen, wird das Piezoelement 12 bestromt, wodurch der Stößel 21 mit dem Verschlußelement 20 zurückgezogen wird, so daß das Medium aus dem Druckraum 22 durch die Durchgangsöffnung 19 zum Tankanschluß T strömen kann.

Wird der Magnet oder das rechte Piezoelement 12 abgeschaltet, drückt der Stößel 21 des weiterhin erregten linken Piezoelementes 12 das Verschlußelement 20 weiter in die Schließstellung. Die Druckfeder 11 ihrerseits schiebt den Kolben 2 in die Ausgangslage nach Fig. 6 zurück.

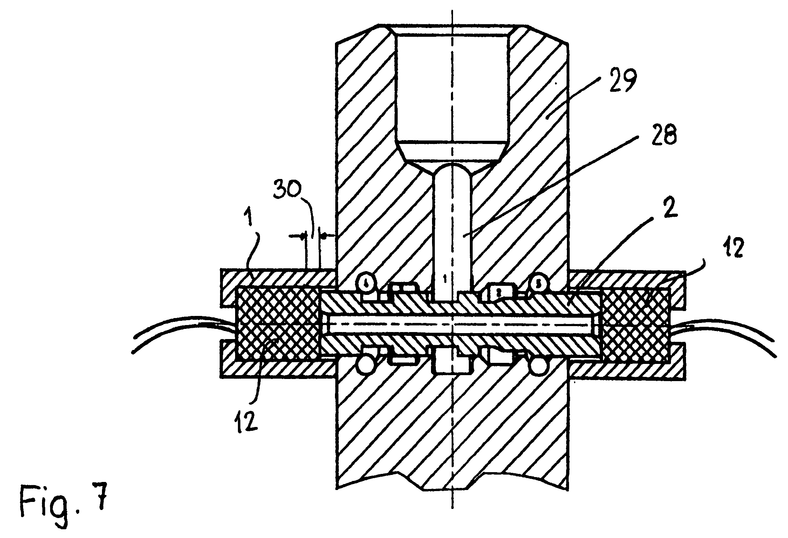

Fig. 7 zeigt ein Anwendungsbeispiel für die Funktion eines direkt gesteuerten 5/2-Wegeventils. Mit dem Kolben 2 wird der Durchgang eines Mediums durch eine Bohrung 28 eines Bauteiles 29 gesteuert. Der Kolben 2 ragt mit seinen Enden seitlich über das Bauteil 29 und liegt mit ihnen an jeweils einem Piezoelement 12 an. Beide Piezoelemente 12 sind im Gehäuse 1 in der beschriebenen Weise untergebracht und gehalten. Das in Fig. 7 linke Piezoelement 12 ist bestromt, während das rechte Piezoelement 12 unbestromt ist. Der maximale Hub des linken Piezoelementes 12 ist mit 30 bezeichnet. Durch entsprechendes Bestromen der beiden Piezoelemente 12 kann der Kolben 2 in die notwendigen Lagen verschoben werden. Da die Funktion des Wegeventils an sich bekannt ist, wird sie nicht näher beschrieben.

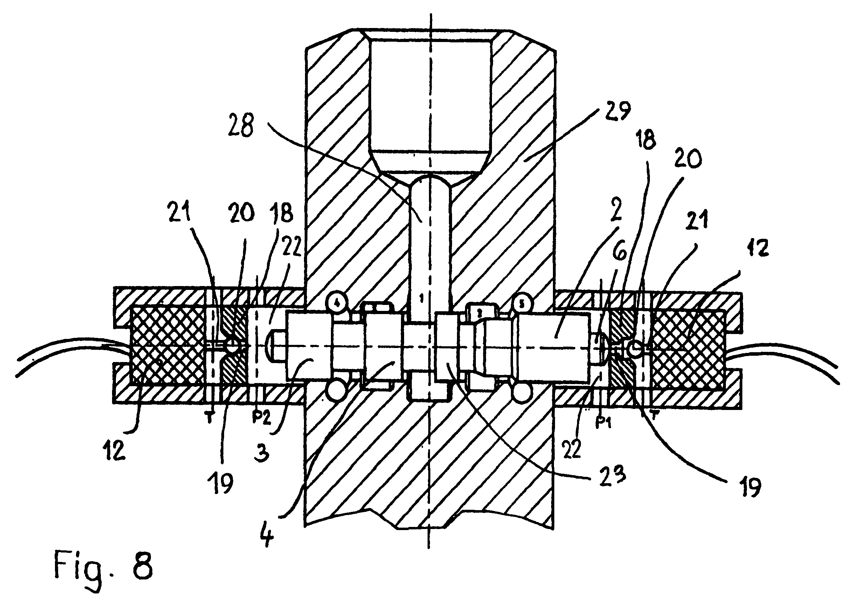

Fig. 8 zeigt ein Anwendungsbeispiel für die Funktion eines vorgesteuerten 5/2-Wegeventils. In diesem Falle hat der Kolben 2 die drei Kolbenstege 3, 4, 23. Die beiden Piezoelemente 12 beiderseits des Bauteiles 29 haben jeweils den Stößel 21, der jeweils das Verschlußelement 20 trägt, mit dem die Durchgangsöffnung 19 im Ventilsitz 18 geschlossen werden kann. In den Druckraum 22 zwischen dem Ventilsitz 18 und dem Kolbensteg 3 mündet der Druckanschluß P2, während in den Druckraum 22 zwischen dem rechten Ventilsitz und dem benachbarten Ende des Kolbens 2 der Druckanschluß P1 mündet.

In der Darstellung gemäß Fig. 8 ist das linke Piezoelement 12 bestromt, so daß es sich längt und damit den entsprechenden Piezohub ausführt, wodurch das Verschlußelement 20 in seine Schließstellung gebracht wird, in der es die Durchgangsöffnung 19 des linken Ventilsitzes 18 schließt. Das rechte Piezoelement 12 ist unbestromt, so daß sein Stößel 21 mit dem Verschlußelement 20 die Durchgangsöffnung 19 des rechten Ventilsitzes 18 freigibt. Über den Druckanschluß P2 wird das entsprechende Druckmedium zugeführt, wodurch der Kolben 2 nach rechts so weit verschoben wird, bis das Kolbenende 6 am rechten Ventilsitz 18 anliegt. Mit dem Kolben 2 wird der Durchfluß des Mediums durch die Bohrung 28 des Bauteils 29 in bekannter Weise gesteuert, je nach Stellung des Kolbens.

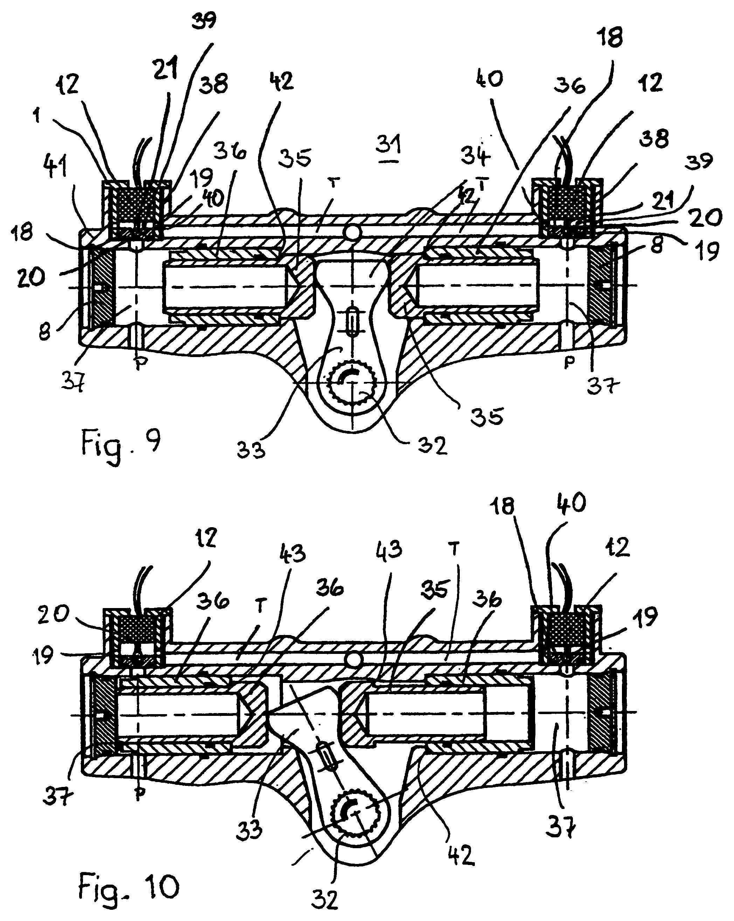

Die Fig. 9 und 10 zeigen die Lageregelung eines Aktuators 31, mit dem eine Schaltwelle 32 eines Schaltgetriebes um ihre Achse gedreht werden kann. Bei dem Getriebe handelt es sich um ein automatisiertes Handschaltgetriebe von Kraftfahrzeugen, bei dem die Schaltwelle 32 um ihre Achse gedreht sowie in Achsrichtung verschoben werden kann, um die Gassen auszuwählen und die Gänge des Schaltgetriebes einzulegen. Auf der Schaltwelle 32 sitzt drehfest ein einarmiger Hebel 33, dessen freies Ende eine Verbreiterung 34 aufweist, an deren einander gegenüberliegenden Enden jeweils ein Hohlkolben 35 mit seinem geschlossenen Ende anliegt. Die Hohlkolben 35 sind jeweils in buchsenförmigen Hilfskolben 36 verschiebbar, die an der Innenwandung des Gehäuses 41 verschiebbar anliegen. Die Hohlkolben 35 ihrerseits liegen an der Innenwandung der Hilfskolben 36 an. Die beiden Kolben 35, 36 liegen jeweils in einem Druckraum 37, der jeweils durch den Deckel 8 geschlossen ist. In die beiden Druckräume 37 mündet jeweils ein Druckanschluß P.

Das Gehäuse 41 hat zwei Anschlußstutzen 38, die jeweils eine Ansteuereinrichtung aufnehmen. Sie weist das Piezoelement 12 auf, das an einer Stirnseite mit dem Stößel 21 und dem Verschlußelement 20 versehen ist, mit dem die Durchgangsöffnung 19 im Ventilsitz 18 geschlossen werden kann. Das Piezoelement 12 und der Ventilsitz 18 sind im Gehäuse 1 aufgenommen, das in den jeweiligen Anschlußstutzen 38 eingesetzt und dort in geeigneter Weise befestigt ist.

Der zwischen dem Piezoelement 12 und dem Ventilsitz 18 befindliche Raum 39 ist über jeweils wenigstens eine Öffnung 40 mit dem Tankanschluß T verbunden, der durch eine parallel zur Achse der Kolben 35, 36 liegende Bohrung im Gehäuse 41 des Aktuators 31 gebildet wird.

In der Mittelstellung gemäß Fig. 9 sind die beiden Piezoelemente 12 bestromt, so daß sie den Piezohub ausführen, so daß das Verschlußelement 20 die Durchgangsöffnung 19 der Ventilsitze 18 verschließt. Auf diese Weise sind die Druckräume 37 von den Öffnungen 40 und somit vom Tankanschluß T getrennt. Über die beiden Druckanschlüsse P wird das unter Druck stehende Medium in die Druckräume 37 zugeführt, wodurch die beiden Kolben 35, 36 in Richtung zueinander bewegt werden. Die Hilfskolben 36 liegen mit ihren einander zugewandten Stirnseiten an jeweils einem gehäuseseitigen Anschlag 42 an, der durch eine radial nach innen gerichtete Ringschulter in der Innenwandung des Gehäuses 41 gebildet ist. Da die beiden Hohlkolben 35 gleich ausgebildet sind, wirken auf beide die gleichen Kräfte, wodurch der Hebel 33 in seiner Mittelstellung gehalten wird.

Um die Schaltwelle 32 zu drehen, wird eines der beiden Piezoelemente 12 nicht mehr bestromt. Im Ausführungsbeispiel nach Fig. 10 wird das linke Piezoelement 12 nicht mehr bestromt. Dadurch kommt das Verschlußelement 20 von der Durchgangsöffnung 19 frei, so daß das im linken Druckraum 37 befindliche Medium über die Durchgangsöffnung 19 und die Öffnung 40 des linken Gehäuses 1 in die Tankbohrung T strömen kann. Da das rechte Piezoelement 12 jedoch weiterhin bestromt ist, bleibt das Verschlußelement 20 in der Schließstellung, so daß der Druck im rechten Druckraum 37 aufrechterhalten bleibt. Dies hat zur Folge, daß der Hohlkolben 35 aus der Stellung gemäß Fig. 9 weiter nach links verschoben wird. Der rechte Hilfskolben 36 kann infolge seiner Anlage am gehäuseseitigen Anschlag 42 nicht weiter nach links verschoben werden. Da der linke Druckraum 37 zur Tankleitung T hin entlastet ist, kann der Hebel 33 entgegen dem Uhrzeigersinn geschwenkt werden, wodurch die beiden linken Kolben 35, 36 entsprechend verschoben werden. Der Hohlkolben 35 weist eine Anschlagfläche 43 auf, an welcher der Hilfskolben 36 anliegt, der somit vom Hohlkolben 35 mitgenommen wird. Die Schaltwelle 32 wird somit entsprechend dem Schwenkweg des Hebels 33 um ihre Achse gedreht.

Die Hilfskolben 36 sind an ihren voneinander abgewandten Enden im Außendurchmesser verringert ausgebildet, so daß in der zurückgeschobenen Lage der Hilfskolben 36 das Druckmedium über die Druckleitung P an die vom Hebel 33 abgewandte Stirnseite der Hilfskolben 36 gelangen kann, wenn diese wieder zurückgeschoben werden sollen.

Wird ausgehend von der Lage gemäß Fig. 10 nunmehr das linke Piezoelement 12 bestromt und das rechte Piezoelement 12 nicht mehr bestromt, verschließt das Verschlußelement 20 des linken Piezoelementes 12 die Durchgangsöffnung 19. Über den Druckanschluß P wird das unter Druck stehende Medium zugeführt, wodurch der linke Hilfskolben 36 stirnseitig mit dem Medium beaufschlagt wird. Der Hilfskolben 36 wird dadurch in Fig. 10 nach rechts verschoben und nimmt über die Anschlagfläche 43 den Hohlkolben 35 mit. Über den Hebel 33 wird zunächst der Hohlkolben 35 so weit zurückgeschoben, bis er mit seiner Anschlagfläche 43 am Hilfskolben 36 zur Anlage kommt. Er wird dann durch den Hohlkolben 35 mitgenommen. Das im rechten Druckraum 37 befindliche Medium gelangt über die Durchgangsöffnung 19 des rechten Ventilsitzes 18 und die Öffnung 40 in die Tankleitung T. Entsprechend dem Schwenkweg des Hebels 33 wird die Schaltwelle 32 um ihre Achse gedreht.

Mit den beiden Piezoelementen 12 wird die Tankverbindung T jeweils freigegeben, damit der Hebel 33 in gewünschtem Maße geschwenkt werden kann. Der Verlust an Druckmedium über die Tankleitung T ist sehr gering, da die Durchgangsöffnung 19 der beiden Ventilsitze 18 in der beschriebenen Weise geschlossen werden kann. Über die im Querschnitt sehr kleinen Öffnungen 40 in der Wandung des Gehäuses 1 kann allenfalls eine geringe Leckage auftreten. Die kleinen Öffnungen 40 bewirken darüber hinaus eine hydraulische Dämpfung, da über den kleinen Öffnungsquerschnitt nur geringe Mengen an Druckmedium fließen können. Werden die Ansteuereinrichtungen mit den Piezoelementen 12 geschlossen, erfolgt ein sofortiger Druckaufbau in dem jeweiligen Druckraum 37, so daß die Kolben 35, 36 schlagartig in die erforderliche Lage verschoben werden. Werden beide Ansteuereinrichtungen geschlossen, werden die Kolben 35, 36 innerhalb kürzester Zeit in die in Fig. 9 dargestellte Neutralposition zurückgestellt.

Die beiden, jeder Ansteuervorrichtung zugeordneten Tankleitungen T sind voneinander getrennt.

Das Gehäuse 41 des Aktuators 31 ist kompakt ausgebildet und nimmt darum nur wenig Raum in Anspruch. Der Hebel 33 ragt in das Aktuatorgehäuse 41, was zur kompakten Bauform beiträgt. Die Anlageflächen der Hebelverbreiterung 34 für die beiden Hohlkolben 35 sind vorteilhaft abgerundet, so daß der Hebel 33 zuverlässig geschwenkt werden kann. Bei der Schwenkbewegung gleitet die Hebelverbreiterung 34 längs der Stirnflächen der Hohlkolben 35, was infolge der Abrundung der beiden Stirnseiten der Verbreiterung einfach möglich ist.

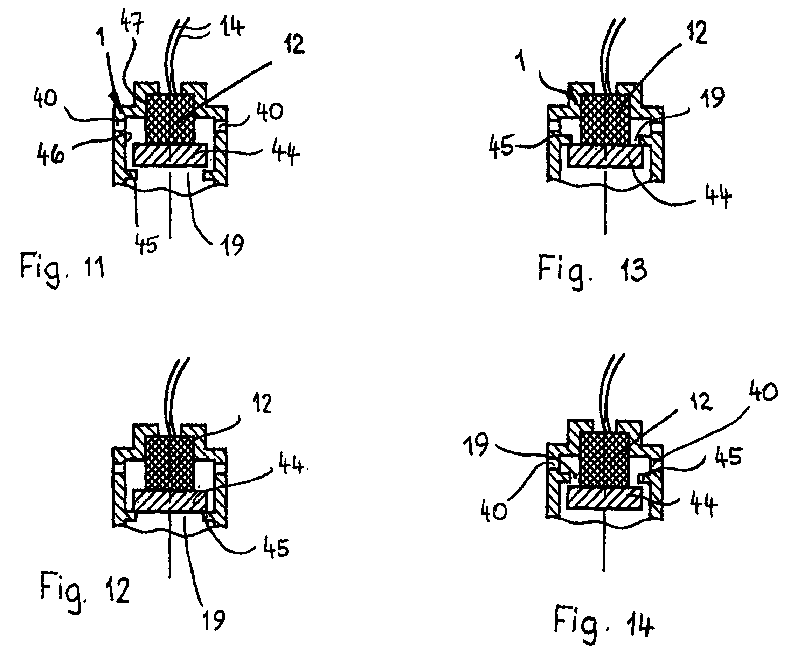

Die Fig. 11 bis 14 zeigen Ansteuereinrichtungen, die im Unterschied zu den Ausführungsformen nach den Fig. 3, 4, 6 und 8 bis 10 anstelle der kleinen Durchgangsöffnung 19 mit einem großen Durchgangsquerschnitt versehen sind. Darum sind diese Ansteuereinrichtungen für eine höhere Dynamik geeignet.

Die Fig. 11 und 12 zeigen ein Beispiel, bei den das Piezoelement 12 an seiner einen Stirnseite mit einem Kolben 44 versehen ist, der als Verschlußelement der Durchgangsöffnung 19 dient. Sie wird durch einen Ringflansch 45 begrenzt, der von der Innenwand 46 des Gehäuses 1 absteht. Es hat an seiner freien Stirnseite eine Vertiefung 47 zur Aufnahme des Piezoelementes 12. Die Anschlußieltungen 14 des Piezoelementes 12 sind entsprechend den vorhergehenden Ausführungsformen nach außen geführt.

Fig. 11 zeigt die Stellung des Verschlußelementes 44, wenn das Piezoelement 12 unbestromt ist. Dann hat sich das Piezoelement 12 verkürzt, so daß das Verschlußelement 44 Abstand vom Ringflansch 45 hat. Dadurch ist die Durchgangsöffnung 19 geöffnet, so daß das Druckmedium am Verschlußelement 44 und am Piezoelement 12 vorbei zu den Öffnungen 40 strömen kann, über welche das Druckmedium zum Tank zurückgeführt wird. Das Verschlußelement 44 hat kleineren Querschnitt als der Innenraum des Gehäuses 1, jedoch größeren Querschnitt als das Piezoelement 12. Da die Durchgangsöffnung 19 einen großen Querschnitt hat, ist diese Ansteuereinrichtung für eine höhere Dynamik beispielsweise des Aktuators 31 gemäß den Fig. 9 und 10 geeignet. Die Ansteuereinrichtung nach den Fig. 11 und 12 kann anstelle der beiden Ansteuereinrichtungen gemäß den Fig. 9 und 10 eingesetzt werden.

Wird das Piezoelement 12 bestromt, längt es sich so stark, daß das Verschlußelement 44 auf dem Ringflansch 45 aufliegt (Fig. 12). Die Durchgangsöffnung 19 ist damit geschlossen.

Die Fig. 13 und 14 zeigen eine Variante des Bespiels nach den Fig. 11 und 12. Der Unterschied besteht lediglich darin, daß die Durchgangsöffnung 19 dann geschlossen wird, wenn das Piezoelement 12 unbestromt ist (Fig. 13). In diesem Falle legt sich das kolbenförmige Verschlußelement 44 an die Unterseite des Ringflansches 45 des Gehäuses 1 an. Wird das durch die Durchgangsöffnung 19 ragende Piezoelement 12 bestromt (Fig. 14), längt es sich, wodurch das kolbenförmige Verschlußelement 44 vom Ringflansch 45 abhebt und damit die Durchgangsöffnung 19 freigibt. Das Druckmedium kann dann am Verschlußelement 44 vorbei zu den Öffnungen 40 strömen, an welche die Tankleitung angeschlossen ist.

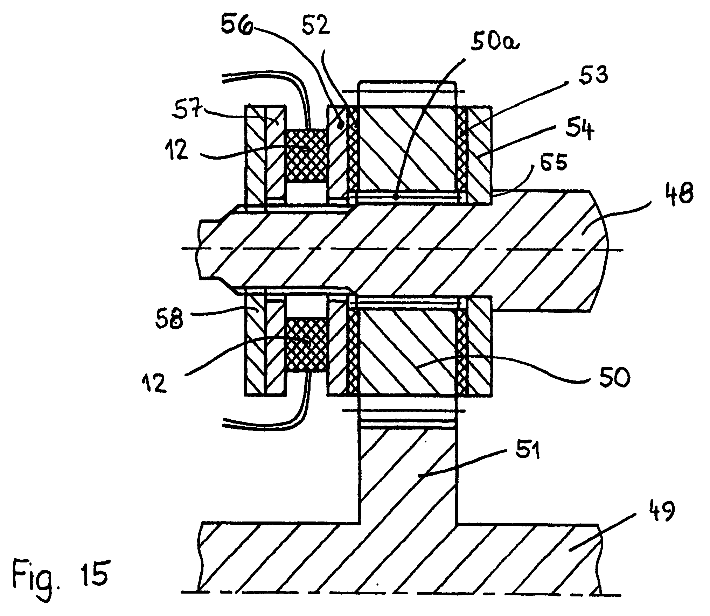

Ein weiteres Beispiel einer Getriebeschaltung zeigt Fig. 15. Zwei parallel zueinander liegende Getriebewellen 48 und 49 können durch Zahnräder 50, 51 miteinander antriebsverbunden werden. Das Zahnrad 51 ist drehfest mit der Getriebewelle 49 verbunden, im Ausführungsbeispiel einstückig mit ihr ausgebildet. Das Zahnrad 50 ist mit einem Lager 50a drehbar auf der Getriebewelle 48 gelagert. An beiden Seiten des Zahnrades 50 ist jeweils ein ringförmiger Reibbelag 52, 53 vorgesehen. Der Reibbelag 53 liegt seinerseits an einem Abstützring 54 an, der an einer radial nach außen gerichteten Ringschulter 55 der Getriebewelle 48 axial abgestützt und drehfest mit ihr verbunden ist.

Am Reibbelag 52 liegt eine flache Druckscheibe 56 an, die im Unterschied zum Abstützring 54 nicht mit der Getriebewelle 48 drehfest verbunden ist. An der vom Reibbelag 52 abgewandten Außenseite der Druckscheibe 56 liegen über den Umfang verteilt mehrere Piezoelemente 12 an. Sie haben entsprechend den vorhergehenden Ausführungsformen rechteckigen Querschnitt und liegen mit einer ihrer ebenen Außenseiten flächig an der ebenen Außenseite der Druckscheibe 56 an. An der gegenüberliegenden Außenseite der Piezoelemente 12 liegt eine weitere dünne Druckscheibe 57 an, die ebenso wie die Druckscheibe 56 nicht mit der Getriebewelle 48 drehfest verbunden ist. Die Druckscheibe 57 wird durch einen flachen Abstützring 58 axial gesichert, der drehfest auf der Getriebewelle 48 sitzt.

Durch Spannungsversorgung der von der Getriebewelle 48 entkoppelten Piezoelemente 12 werden diese gelängt. Da die Piezoelemente 12 durch den Abstützring 58 in einer Axialrichtung festgelegt sind, führt ihre Längung dazu, daß das Zahnrad 50 über die Reibbeläge 52, 53 fest gegen den Abstützring 54 gepreßt wird, der drehfest mit der Getriebewelle 48 verbunden ist. Somit wird bei Bestromung der Piezoelemente 12 das Zahnrad 50 kraftschlüssig mit der Getriebewelle 48 verbunden. Dadurch erfolgt eine Kraft- bzw. Drehmomentübertragung von der Getriebeeingangswelle 49 über die Zahnräder 50, 51 auf die Getriebewelle 48. Die auf die Reibbeläge 52, 53 ausgeübte Kraft ist proportional der an die Piezoelemente 12 angelegten Spannung. Somit kann die Reibkraft in Abhängigkeit von der auf die Piezoelemente 12 wirkenden Spannung stufenlos eingestellt werden. Werden die Piezoelemente 12 nicht mehr bestromt, verkürzen sie sich, wodurch die auf die Reibbeläge 52, 53 wirkende Kraft so weit verringert wird, daß das Zahnrad 50 von der Getriebewelle 48 drehentkoppelt ist.

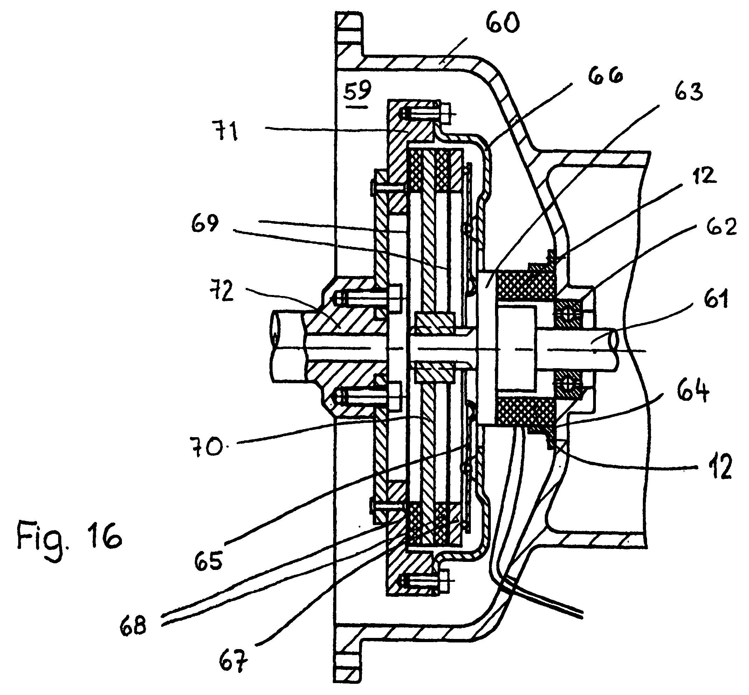

Fig. 16 zeigt eine Kupplung 59, die in einem Getriebegehäuse 60 untergebracht ist. Es wird von einer Getriebewelle 61 durchsetzt. Sie ist im Getriebegehäuse 60 durch Lager 62 drehbar abgestützt. Auf der Getriebewelle 61 sitzt ein Ausrücklager 63, an dessen Umfangsbereich gleichmäßig verteilt angeordnete Piezoelemente 12 anliegen. Sie sind durch einen Haltering 64 radial gesichert, der an der Innenseite des Getriebegehäuses 60 befestigt wird. Die Piezoelemente 12 haben rechteckigen Querschnitt und liegen mit der einen Stirnseite an der Unterseite des Ausrücklagers 63 und mit ihrer anderen Stirnseite an der Innenwand des Getriebegehäuses 60 an.

Das Ausrücklager 63 liegt mit seiner von den Piezoelementen 12 abgewandten Stirnseite an einer Tellerfeder 65 an, die in einem Kupplungsgehäuse 66 der Kupplung 59 untergebracht ist. Die Tellerfeder 65 liegt ihrerseits an einem dünnen Druckring 67 an, der in bekannter Weise auf Kupplungsbeläge 68 im Randbereich von Kupplungslamellen 69 einwirkt. Zwischen den beiden Kupplungsbelägen 68 befindet sich eine Mitnehmerscheibe 70, die drehfest auf der Getriebewelle 61 sitzt.

Das Kupplungsgehäuse 66 übergreift die Kupplungslamellen 69 haubenartig und ist am Rand mit einem Schwungrad 71 verbunden, das seinerseits drehfest mit einer Kurbelwelle 72 verbunden ist, die koaxial zur Getriebewelle 61 liegt.

Werden die Piezoelemente 12 bestromt, wird der Piezohub auf die Kupplung 59 übertragen und trennt die Reibbeläge 68. Der Verschleiß dieser Kupplungsbeläge 68 wird in bekannter Weise durch eine (nicht dargestellte) selbstnachstellende Mechanik ausgeglichen. Die Kupplung 59 öffnet in der beschriebenen Weise mit Kraft. Die Piezoelemente 12 ersetzen den Kupplungszylinder bzw. den Zentralausrücker.

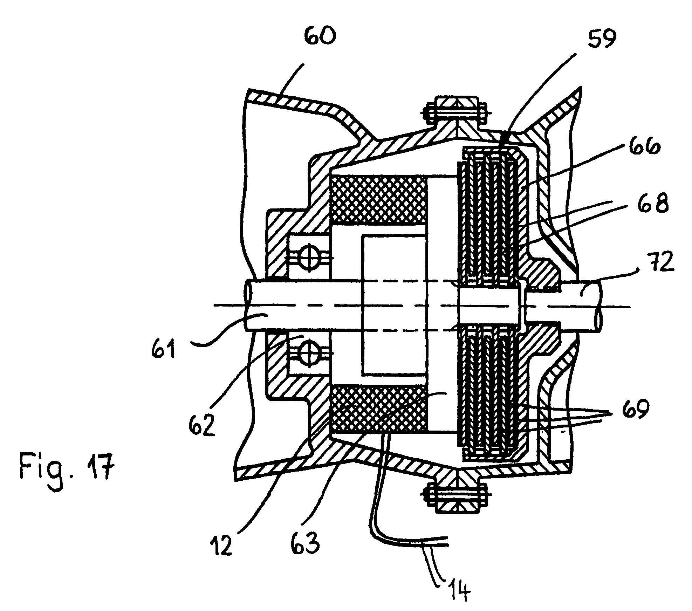

Während Fig. 16 eine Trockenkupplung 59 zeigt, ist in Fig. 17 eine Naßkupplung 59 dargestellt, bei der die Kupplung mit Kraft geschlossen wird. Im Getriebegehäuse 60 ist das Kupplungsgehäuse 66 untergebracht, in dem die Kupplungslamellen 69 mit den Kupplungsbelägen 68 untergebracht sind. Das Kupplungsgehäuse 66 sitzt drehfest auf der Kurbelwelle 72, die koaxial zur Getriebewelle 61 liegt. Sie ist mit dem Lager 62 drehbar im Getriebegehäuse 60 gelagert und trägt das Ausrücklager 63, an dessen von der Kupplung 59 abgewandter Seite die Piezoelemente 12 anliegen, die über den Umfang des Ausrücklagers 63 verteilt angeordnet sind. Entsprechend der vorherigen Ausführungsform stützen sich die Piezoelemente 12 an der Innenseite des Getriebegehäuses 60 ab. Wie bei der vorigen Ausführungsform sind die Anschlußleitungen 14 der Piezoelemente 12 aus dem Getriebegehäuse 60 herausgeführt.

Werden die Piezoelemente 12 bestromt, wird die Kupplung 59 geschlossen. Das über die Kupplung 59 übertragbare Drehmoment ist proportional der an die Piezoelemente 12 angelegten Spannung.

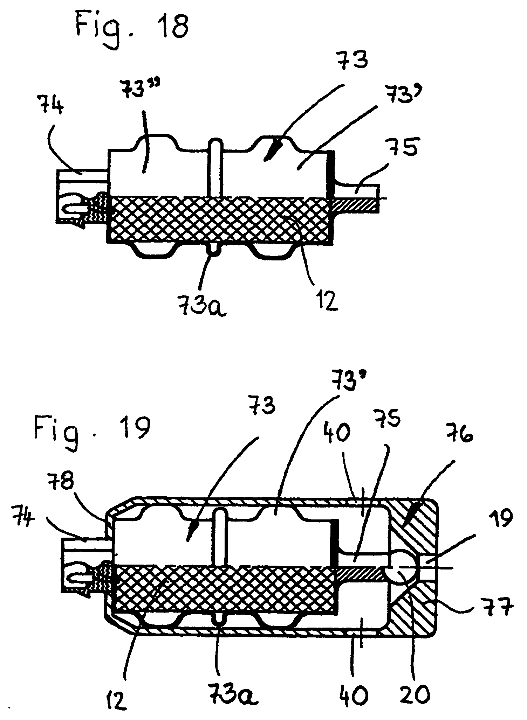

Fig. 18 zeigt eine Ansteuereinrichtung mit einem Gehäuse 73 für das Piezoelement 12. Das Gehäuse 73 besteht aus zwei Gehäuseteilen 73' und 73", die durch ein elastisches Dehnelement 73a miteinander verbunden sind. Das Dehnelement 73a ist balgförmig als dehnbare Balgwelle ausgebildet. Das Gehäuse 73 hält das Piezoelement 12 unter Druckspannung, um Hystereseeffekte aus Temperatur- und Belastungsänderungen gering zu halten. Das Gehäuse 73 funktioniert wie eine Feder, d.h. die aufzubringende Kraft für eine Längenänderung steigt proportional mit dieser Längenänderung.

Das Gehäuse 73 hat an einer Stirnseite einen Stecker 74 und an der gegenüberliegenden Stirnseite einen axialen Stößel 75. Über den Stecker 74 wird das Piezoelement 12 an die Strom/Spannungsversorgung angeschlossen. Der elektrische Anschluß kann aber auch über die Anschlußleitungen 14 erfolgen, wie anhand der Fig. 1 bis 17 erläutert worden ist. Wird das Piezoelement 12 bestromt, längt es sich. Dies hat zur Folge, daß der Gehäuseteil 73' entsprechend dem Piezohub unter elastischer Verformung des Dehnelementes 73a gegenüber dem Gehäuseteil 73" verschoben wird, da das Piezoelement 12 mit seinen beiden Enden an den Enden der Gehäuseteile 73', 73" anliegt. Mit dem Stößel 75 an der Stirnseite des Gehäuseteiles 73' kann eine entsprechende Funktion, wie das Schließen eines Ventilsitzes, Verschieben eines Kolbens und dergleichen, vorgenommen werden. Wird das Piezoelement 12 nicht mehr bestromt, verkürzt es sich. Das Dehnelement 73a zieht den Gehäuseteil 73' wieder zurück und hält ihn in Anlage am Piezoelement.

Die Ansteuereinrichtung gemäß Fig. 18 kann bei allen zuvor beschriebenen Anwendungen verwendet werden.

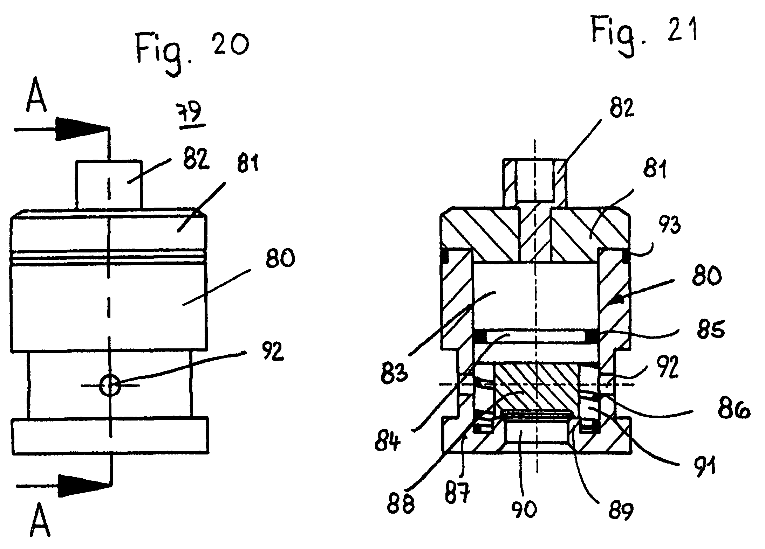

Bei der Ausführungsform nach Fig. 19 ist das Gehäuse 73 in ein Gehäuse 76 eines Vorsteuerteiles eingebaut. Das Gehäuse 73 ist gleich ausgebildet wie bei der Ausführungsform nach Fig. 18. Der einzige Unterschied besteht darin, daß der Stößel 75 am freien Ende mit dem Verschlußelement 20 versehen ist, mit dem die Durchgangsöffnung 19 im Gehäuse 76 geschlossen werden kann. Die Durchgangsöffnung 19 ist in einem verdickten Boden 77 des Gehäuses 76 vorgesehen.

Der Stecker 74 für das Piezoelement 12 ragt aus dem Vorsteuergehäuse 76. Das Gehäuse 73 liegt mit seiner steckerseitigen Stirnfläche an der Rückseite 78 des Vorsteuergehäuses 76 an. Zwischen dem Gehäuse 73 des Piezoelementes 12 und dem Vorsteuergehäuse 76 kann eine Dichtung angeordnet werden, um Pumpeffekte im Raum zwischen dem steckerseitigen Ende des Gehäuses 63 und der Rückseite 78 des Vorsteuergehäuses 76 durch die Längenänderungen des Piezoelementes 12 zu vermeiden. Anderenfalls würde Hydraulikmedium zwischen den beiden Räumen vor und hinter dem Gehäuse 73 hin- und hergepumpt werden, was zu einem Dämpfungseffekt und zu Geschwindigkeitseinbußen führen würde. Die (nicht dargestellte) Dichtung, die zum Beispiel ein O-Ring sein kann, ist zweckmäßig im vorderen Teil des Gehäuses 73 angeordnet. Das Balgelement 73a ist vorteilhaft ebenfalls im Bereich vor der Dichtung angeordnet. Dies hat den Vorteil, daß die Dichtung beim Hub des Piezoelementes 12 selbst nicht mitbewegt wird, da in diesem Falle nur der Gehäuseteil 73' axial bewegt wird, der sich auf der dem Gehäuseboden 77 zugewandten Seite des Balgelementes 73a befindet.

Wird das Piezoelement 12 bestromt und dementsprechend gelängt, verschließt das Verschlußelement 20 die Durchgangsöffnung 19. Wird das Piezoelement 12 nicht mehr bestromt, verkürzt es sich, so daß die Durchgangsöffnung 19 freigegeben wird. Das Druckmedium kann dann über die Durchgangsöffnung 19 zu den Öffnungen 40 im Vorsteuergehäuse 76 strömen.

Es ist auch möglich, die Anordnung so vorzusehen, daß das Piezoelement 12 in unbestromtem Zustand mit dem Verschlußelement 20 die Durchgangsöffnung 19 verschließt. Soll sie geöffnet werden, wird das Piezoelement 12 bestromt, so daß es sich zusammenzieht und dadurch das Verschlußelement 20 die Durchgangsöffnung 19 freigibt.

Die Fig. 20 und 21 zeigen eine elektromagnetische Betätigungseinrichtung 79, mit der Vorsteuerelemente betätigt werden können. Die Betätigungseinrichtung hat ein Gehäuse 80, das an einem Ende mit einem Deckel 81 geschlossen wird. In den Deckel 81 ist ein Stecker 82 eingesetzt, mit dem ein im Gehäuse 80 untergebrachter Flachankermagnet 83 mit Strom versorgt wird. Er hat eine Ringnut 84 zur Aufnahme einer Ringdichtung 85, mit welcher der Flachankermagnet 83 gegen die Innenwandung des Gehäuses 80 abgedichtet ist.

Am Flachankermagnet 83 stützt sich das eine Ende einer Druckfeder 86 ab, deren anderes Ende auf einem Boden 87 des Gehäuses 80 abgestützt ist. Die Druckfeder 86 umgibt mit Abstand einen Stößel 88, der auf der Stirnseite eines vom Gehäuseboden 87 axial nach innen ragenden Ringes 89 anliegt. Der Ring 89 umschließt teilweise eine Durchtrittsöffnung 90 im Gehäuseboden 87. Der Stößel 88 wird von einem Ringraum 91 umgeben, in den Öffnungen 92 im Gehäusemantel münden. In der in Fig. 21 dargestellten Lage verschließt der Stößel 88 die Durchtrittsöffnung 90. In dieser Lage wird er durch den Flachankermagneten 83 gehalten, der entsprechend bestromt wird. Wird er nicht mehr bestromt, drückt ihn die Druckfeder 86 in Fig. 21 nach oben, wodurch der mit dem Flachankermagneten 83 verbundene Stößel 88 vom ringförmigen Vorsprung 89 abhebt und auf diese Weise die Durchtrittsöffnung 90 freigibt.

Der Deckel 81 ist durch eine Ringdichtung 93 gegenüber dem zylindrischen Mantelteil des Gehäuses 80 abgedichtet.

## Patentansprüche

1. Wegeventil mit einer Ansteuereinrichtung, mit einem Gehäuse (1), in dem wenigstens ein Antriebselement (12) untergebracht ist, das durch wenigstens ein Piezoelement gebildet ist, das ein spannungsabhängiges Weg-Kraft-Verhalten zeigt und das wenigstens ein Verschlußelement (20) betätigt, mit dem eine in einem Ventilsitz (18) angeordnete Durchtrittsöffnung (19) verschließbar ist, um einen Tankanschluß (T) von einem Druckraum (22) zu trennen, und mit einem Kolbenstege (3, 4, 23) aufweisenden Kolben (2), der gegen die Kraft einer Druckfeder (11) verschiebbar ist,
**dadurch gekennzeichnet, daß** sich die Druckfeder (11) am Ventilsitz (18) und an einen Kolbensteg (3) abstützt.

2. Wegeventil nach Anspruch 1,
**dadurch gekennzeichnet, daß** die Durchtrittsöffnung (19) zentrisch im Ventilsitz (18) vorgesehen ist.

3. Wegeventil nach Anspruch 1 oder 2,
**dadurch gekennzeichnet, daß** das Verschlußelement (20) an einem Stößel (21) vorgesehen ist, der mit dem Piezoelement (12) verbunden ist.

4. Wegeventil nach einem der Ansprüche 1 bis 3,
**dadurch gekennzeichnet, daß** der Kolben (2) durch ein weiteres Piezoelement (12) am anderen Ende betätigbar ist.

5. Wegeventil nach einem der Ansprüche 1 bis 4,
**dadurch gekennzeichnet, daß** der Kolben (2) zwei oder drei Kolbenstege (3, 4, 23) aufweist.

6. Wegeventil nach einem der Ansprüche 1 bis 5,
**dadurch gekennzeichnet, daß** die Druckfeder (11) im Druckraum (22) untergebracht ist, der durch den Kolbensteg (3) begrenzt ist.

## Claims

1. Directional control valve having a control device, having a housing (1) in which at least one drive element (12) is accommodated, which drive element is formed by at least one piezo element which exhibits a voltage-dependent travel-force behaviour and which actuates at least one closing element (20), by which a through opening (19) arranged in a valve seat (18) can be closed in order to separate a tank connection (T) from a pressure space (22), and having a piston (2) which has piston lands (3, 4, 23) and is displaceable against the force of a pressure spring (11),
**characterised in that** the pressure spring (11) is supported on the valve seat (18) and on a piston land (3).

2. Directional control valve according to Claim 1,
**characterised in that** the through opening (19) is provided centrally in the valve seat (18).

3. Directional control valve according to Claim 1 or 2,
**characterised in that** the closing element (20) is provided on a plunger (21) which is connected to the piezo element (12).

4. Directional control valve according to one of Claims 1 to 3,
**characterised in that** the piston (2) can be actuated by a further piezo element (12) at the other end.

5. Directional control valve according to one of Claims 1 to 4,
**characterised in that** the piston (2) has two or three piston lands (3, 4, 23).

6. Directional control valve according to one of Claims 1 to 5,
**characterised in that** the pressure spring (11) is accommodated in the pressure space (22) which is bounded by the piston land (3).

## Revendications

1. Distributeur avec un dispositif d'amorçage, avec un boîtier (1), dans lequel est logé au moins un élément d'entraînement (12), qui est formé par au moins un élément piézo-électrique, qui fait preuve d'un comportement course/force en fonction de la tension et qui actionne au moins un élément de fermeture (20), permettant de fermer un orifice de passage (19) disposé dans un siège de soupape (18) pour séparer un raccordement sur un réservoir (T) d'une chambre de pression (22) avec un piston (2) comportant des listels de piston (3, 4, 23) qui est déplaçable à l'encontre de la force d'une ressort de pression (11),
**caractérisé en ce que** le ressort de pression (11) s'appuie sur le siège de soupape (18) et sur un listel de piston (3).

2. Distributeur selon la revendication 1
**caractérisé en ce que** l'orifice de passage (19) est prévu de façon centrée dans le siège de soupape (18).

3. Distributeur selon la revendication 1 ou 2,
**caractérisé en ce que** l'élément de fermeture (20) est prévu sur un coulisseau (21), qui est relié à l'élément piézoélectrique (12).

4. Distributeur selon l'une quelconque des revendications 1 à 3, **caractérisé en ce que** le piston (2) est actionnable par l'intermédiaire d'un élément piézoélectrique supplémentaire (12) sur l'autre extrémité.

5. Distributeur selon l'une quelconque des revendications 1 à 4, **caractérisé en ce que** le piston (2) comporte deux ou trois listels de piston (3, 4, 23).

6. Distributeur selon l'une quelconque des revendications 1 à 5, **caractérisé en ce que** le ressort de pression (11) est logé dans la chambre de combustion (22) qui est limitée par le listel de piston (3).
